# EUROPEAN PATENT SPECIFICATION

(11) **EP 2 017 158 B1**
(45) Date of publication and mention of the grant of the patent: **08.01.2014**
(21) Application number: 08157826.2
(22) Date of filing: 09.06.2008
(51) Int. Cl.: B62B 5/06, B62B 9/20

(54) **Device for transforming the handgrip of an umbrella-closable type pushchair into a handgrip of a book-closable type pushchair**
Vorrichtung zur Umformung des Handgriffs eines wie einen Schirm klappbaren Kinderwagens in einen Handgriff eines wie ein Buch klappbaren Kinderwagens
Dispositif pour transformer la poignée d'une poussette canne en une poignée d'une poussette de type à fermeture en livre

(30) Priority: 17.07.2007 IT MI20070250 U
(43) Date of publication of application: 21.01.2009
(73) Proprietor: ARTSANA S.p.A., 22070 Grandate (Como) (IT)
(72) Inventor: Mancuso, Valentina, 20069 Vaprio d'Adda (Milano) (IT); Corti, Lazzarino, 22031 Albavilla (Como) (IT)
(74) Representative: Ripamonti, Enrico

(56) References cited:
- EP-A- 0 577 496
- EP-A- 0 719 693
- GB-A- 2 403 934
- US-A- 5 915 712

## Description

The present invention relates to a device applicable to a pushchair of umbrella-closable type, in accordance with the introduction to the main claim.

This claim portion refers to EP 719693 which is considered to be the closest prior art.

A pushchair of umbrella-closable type is known to comprise a frame mounted on wheels and carrying an element or seat for supporting a child. The frame presents opposing lateral rods or bars extending to the rear of the seat and terminating in handgrips enabling the pushchair to be manipulated by a user. These handgrips are hence separated from each other, they generally have a part forming an angle to the longitudinal axis of the corresponding rods or bars, and can preferably rotate about this axis to be able to assume a stable working position in which the handgrips have been rotated and converge towards a central plane of said frame.

This pushchair is simple to use and occupies little space when folded. However it can happen that the shape of the handgrips does not facilitate its movement, particularly when the user manipulating it has one hand occupied and a child is seated on the pushchair.

A pushchair of book-closable type also presents a frame with lateral rods or bars extending to the rear of the child's seat; however these rods are connected together at their upper free end by a single handgrip disposed transversely to the central plane through the frame of the pushchair. This latter is therefore always easy to manipulate, even when the user has one hand occupied; however, even when folded this pushchair is of large overall size, which does not facilitate its transportation when folded nor, when in this state, its positioning in a room, for example of the home.

An object of the present invention is to provide a puschair of umbrella-closable type comprising a device which when applied, when required, to said umbrella-closable pushchair, enables it to be easily manipulated even when the user has one hand occupied and a weight (such as that of a child) acts on the seat or support of the pushchair.

Another object is to provide a device of the stated type which can be used at will only when its use is considered necessary by the user.

A further object is to provide a device of the said type which can be easily and quickly applied to the pushchair handgrips.

Another object is to provide a device of the stated type which can be easily transported when not applied to the pushchair, hence making it always available when its use is required.

These and other objects which will be apparent to the expert of the art are attained by a device in accordance with the accompanying claims.

The present invention will be more apparent from the accompanying drawings, which are provided by way of non-limiting example and in which:
Figure 1 is a view of a device of the invention, seen from the rear, when being secured to a pushchair of umbrella-closable type;

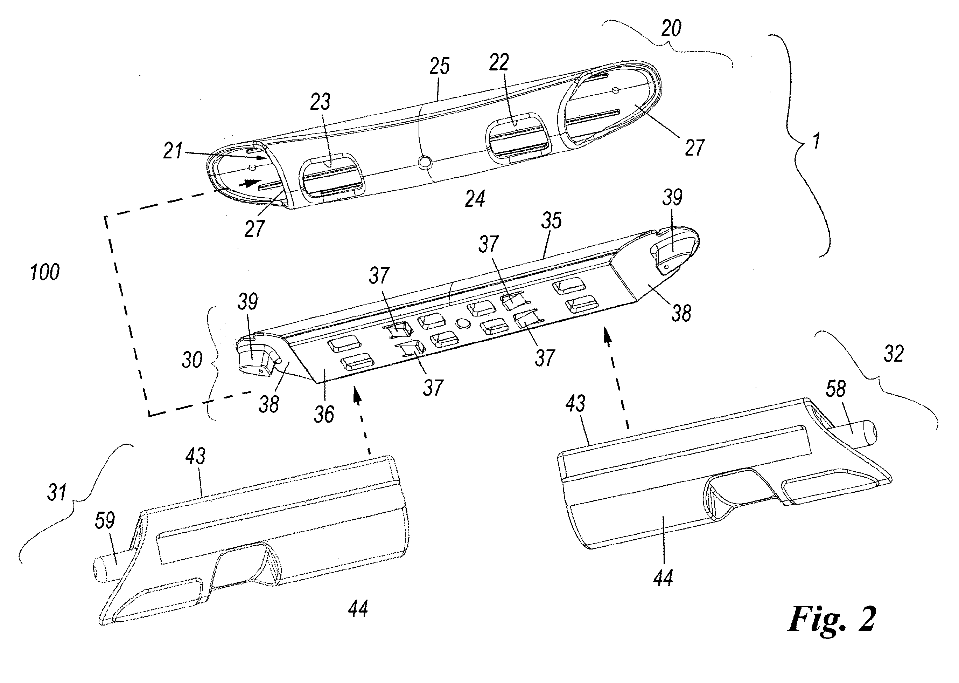

Figure 2 shows an exploded perspective view of the device of Figure 1;
Figure 3 shows a front perspective view of the device of Figure 1;
Figure 4 shows a longitudinal section through the device of Figure 1;
Figure 5 shows a longitudinal section through the device of Figure 1, but taken on a different sectional plane; and
Figures 6A-6D show, in partly sectional front view, various steps in coupling the device of the invention to the pushchair.

With reference to said figures, these show a device 1 to be used in a pushchair 2 of umbrella-closable type. The pushchair 2 comprises a frame 3 mounted on wheels 4 and presenting a support or seat for a child (not shown). Laterally, the frame 3 presents parallel rods or bars 5 extending to the rear of the seat and carrying at their free end 8 handgrips 9 having in known manner a portion 10 rigid directly with the corresponding rod 5, and an end portion 11 bent away from the longitudinal axis W of said rod. This end portion 11 of each handgrip 9 can be rotated about said axis W and can assume a plurality of stable working positions; in one of these positions, the handgrips 9 have their portions 11 facing towards a central plane P through the frame 3 of the pushchair 2.

According to the invention, the device 1 can be removably coupled to said handgrips such as to "connect" them together and transform the handgrips of the umbrella-closable pushchair into the handgrip of a pushchair of book-closable type. This latter handgrip is more comfortable when using the pushchair with one hand (if the other is occupied).

More particularly, the device 1 comprises a body 100 presenting a cover element 20 internally hollow at 21 and comprising apertures 22 and 23 in a first face or lower side 24. This side 24 is of smaller area than the upper or second face 25 of the element 20, such that this latter comprises open flared ends 27 on its inner cavity 21.

Three internal elements 30, 31 and 32 can be inserted into said cavity. The first element 30 forms a central core of the device 1. It comprises a first end part to connect as a form fit to the upper side 25 of the element 20 and a lower second central flat end part 36 presenting inclined plane projections 37. The element 30 presents lateral inclined plane end portions 38 from which shaped elements 39 project. These latter are positioned within the open flared end 27 of the cavity 21 of the cover element so as to project from this latter and be able to cooperate as a form fit with the recess 40 provided in the handgrips 9.

The second elements 31 and 32, mutually identical but specular, are positioned between the element 30 and the lower side 24 of the cover element 20. Each of these elements 31 and 32 presents a first side 43 (upper side in the figures) to rest on the second part 36 of the first element, and a second side 44 to cooperate as a form fit with the first face or lower side 24 of the cover element 20. In the first side 43, said second element 31, 32 presents a recess 45 to receive one or more projections 37 of the first element 30, to hence lock the second element within the cover element 20 once it is inserted into this latter. The insertion is facilitated by the fact that each projection 37 is shaped as an inclined plane tapering towards the adjacent end 27 of the cavity 21 and that the projection is formed on an elastically deformable tang 50 movable within an inner cavity 51 of the first element 30 lying below the projection 37.

Each of the second elements 31, 32 comprises a lateral pusher 56 movable within said element against a spring 57 contained in the element 31, 32. This pusher 56 presents a projecting pin 58 arranged to cooperate with a seat 59 provided at a free end 60 of a corresponding portion 11 of the relative handgrip 9.

The pusher 56 can be reached from the outside of the element 20 through a corresponding aperture 23 provided therein.

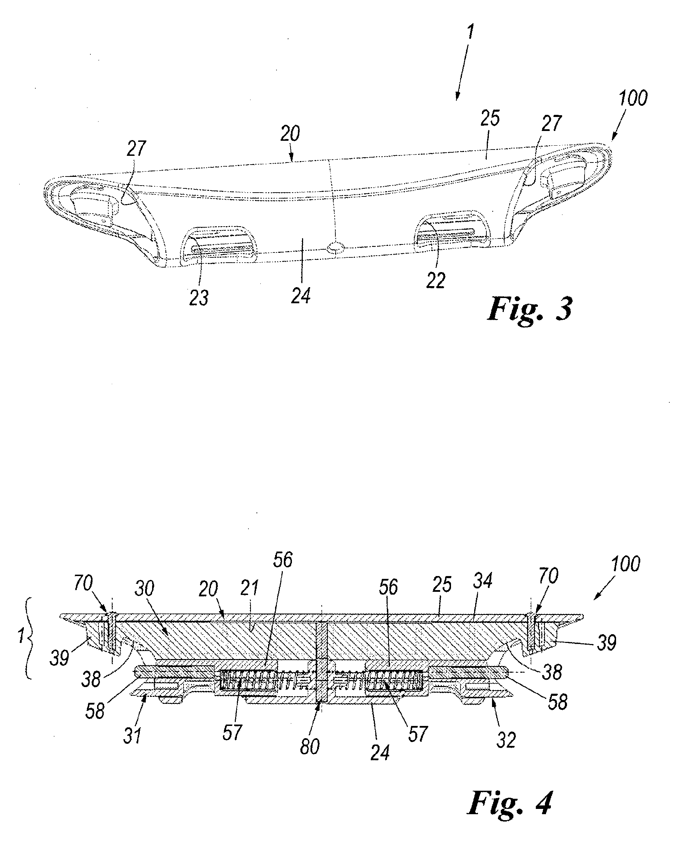

Finally, fixing pins (or similar securing means) 70 and 80 secure the elements 20 and 30 as shown in Figure 4.

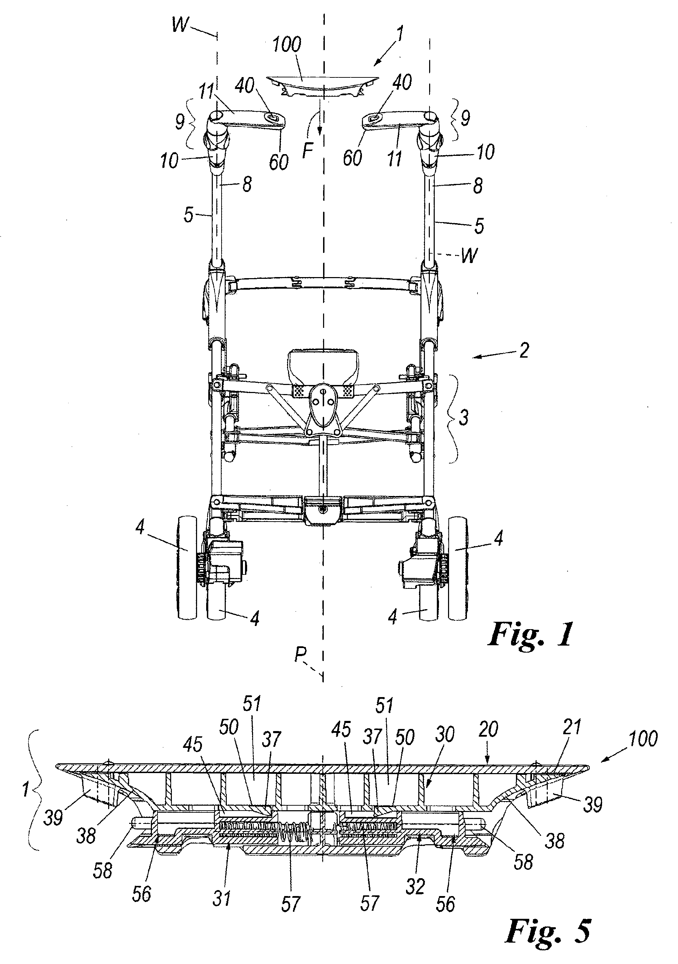

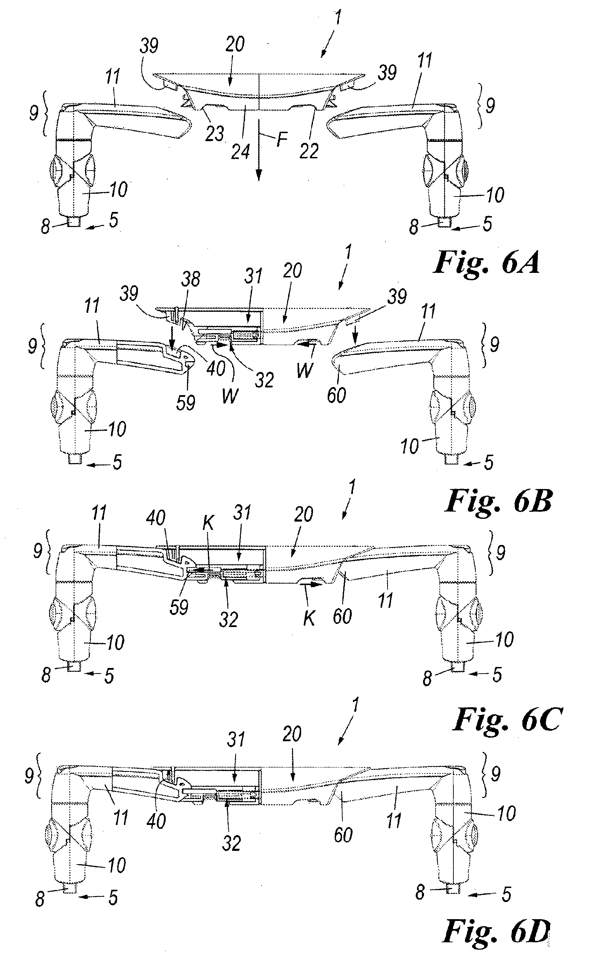

To couple the device 1 to the pushchair handgrips 9, a user slides the pushers 56 within the elements 30 and 31 by acting through the apertures 22 and 23 (arrows W of Figure 6B). Then, being careful to position the handgrip portions 11 facing the plane P, the user moves the device towards the handgrips (arrow F of Figure 1 and Figure 6A). This causes the shaped elements 39 to penetrate into the recesses 40 of said portions 11.

On releasing the pushers 56, the springs 57 urge (arrows K of Figure 6C) the corresponding pins 58 into the seats 59, to hence finally secure the device 1 to the handgrips 9. Hence as described, by moving the device 1 and pusher 56 along perpendicular directions (arrows F and W or K), a handgrip typical of a book-openable pushchair can be quickly and easily obtained in a pushchair of umbrella-closable type.

The device 1 is separated from the handgrip by acting on the pushers 56 through the apertures 22 and 23, to separate the pins 58 from the seats 60 and raise the device 1 from the handgrips 9. These latter again become free and the pushchair can be closed in the manner of an umbrella. At the same time, the device 1 can easily be stored in a bag or container usually associated with the pushchair (such as an under-bag) to always be ready for use when required.

A preferred embodiment of the invention has been described. However other embodiments are possible in the light of the preceding description and are to be considered as falling within the scope of the following claims.

## Claims

1. A pushchair (2) of umbrella-closable type comprising a device (1), a frame (3) mounted on wheels and carrying a support for a child, said frame (3) having lateral rods (5) extending to the rear of said support and presenting end handgrips (9) rotatable about a longitudinal axis (W) of the corresponding rods (5) in order to be able to lie in a position in which they converge towards a central plane (P) through the frame (3), said device comprising a body (100) presenting connecting elements (39) able to connect as a form fit to recesses (40) provided in said handgrips (9) and comprising elastically loaded movable members (56) able to releasably connect to corresponding seats (59) provided in said handgrips (9), said connection taking place along a direction perpendicular to that of the connection between said connecting elements (39) and said recesses (40), the body when connected in this manner to the handgrips (9) lying transversely to the central plane (P) through said frame (3) and securely connecting the handgrips (9) together such as to define a handgrip typical of a pushchair of book-closable type, wherein the elastically loaded members are pushers (56); **characterised in that** the device is separated detachable from the rotatable handgrips (9) by acting on said pusher.

2. A pushchair as claimed in claim 1, **characterised in that** its body (100) comprises an internally hollow (at 21) element (20) with opposing lateral flared apertures (27), said hollow element or cover element containing a first inner element (30) to which second inner elements (31, 32) provided with the movable pusher (56) are coupled, said cover element (20) and said first inner element (30) being mechanically fixed together by fixing means (70, 80).

3. A pushchair as claimed in claim 2, **characterised in that** the cover element (20) presents a first and second face (24, 25); the first face presenting apertures (22, 23) enabling said pusher (56) positioned inside said cover element (20) to be reached and moved.

4. A pushchair as claimed in claim 3, **characterised in that** the cover element (20) presents a first end part (34) to lie facing the second face (25) of the cover element, and a flat second end part (36) presenting fixing means (37) for said second inner elements (31, 32) of the cover element (20), said first inner element (30) presenting lateral inclined plane end portions (38) from which the elements (39) project to cooperate as a form fit with the recesses (40) provided in the handgrip (9).

5. A pushchair as claimed in claim 4, **characterised in that** fixing means for the second inner elements are inclined plane projections (37) each projection tapering inn the direction facing the adjacent lateral end portion (38), said projection being carried by a tang (50) elastically movable within an internal cavity (51) of the first inner element (30).

6. A pushchair as claimed in claim 5, **characterised in that** the projections (37) of the first inner element cooperate with at least one recess (45) provided in a first side (43) of each of the second inner elements (31, 32), these latter being identical but specular within the cover element (20) and presenting a second side (44) arranged to lie against the first face (24) of said cover element (20), the pusher (56) being movable within each of said second inner elements (31, 32).

7. A pushchair claimed in claim 6, **characterised in that** the pusher (56) is movable against a spring (57) within the corresponding second inner element (31, 32), said pusher carrying a pin (58) projecting laterally from the cover element, to cooperate with the corresponding seat (59) in the handgrip (9) of the pushchair (2) of umbrella-closable type.

## Patentansprüche

1. In der Art eines Regenschirms schließbarer Schubwagen (2) mit einer Vorrichtung (1), einem Rahmen (3), der auf Rädern montiert ist und eine Stütze für ein Kind trägt, wobei der Rahmen (3) seitliche Stangen (5) hat, die sich zur Hinterseite der Stütze hin erstrecken und Endhandgriffe (9) aufweisen, die um eine Längsachse (W) der entsprechenden Stangen (5) drehbar sind, um in einer Position liegen zu können, in der sie in Richtung einer Mittenebene (P) durch den Rahmen (3) konvergieren, wobei die Vorrichtung einen Körper (100) aufweist, der Verbindungselemente (39) hat, die formschlüssig mit Ausnehmungen (40) verbunden werden können, die in den Handgriffen (9) vorgesehen sind, und elastisch belastete bewegliche Elemente (56), die lösbar mit korrespondierenden Aufnahmen (59) verbunden werden können, welche in den Handgriffen (9) vorgesehen sind, wobei die Verbindung in einer Richtung senkrecht zu der der Verbindung zwischen den Verbindungselementen (39) und den Ausnehmungen (40) stattfindet, wobei der Körper, wenn er auf diese Weise mit den Handgriffen (9) verbunden ist, quer zur Mittenebene (P) durch den Rahmen (3) liegt und die Handgriffe (9) sicher miteinander verbindet, um einen Handgriff zu definieren, der für einen in der Art eines Buchs schließbaren Schubwagen typisch ist, wobei die elastisch belasteten Elemente Drücker (56) sind; **dadurch gekennzeichnet, dass** die Vorrichtung von den drehbaren Handgriffen (9) durch Einwirken auf den Drücker abnehmbar getrennt wird.

2. Schubwagen nach Anspruch 1, **dadurch gekennzeichnet, dass** sein Körper (100) ein innen hohles (bei 21) Element (20) mit gegenüberliegenden seitlichen aufgeweiteten Öffnungen (27) aufweist, wobei das hohle Element oder Abdeckelement ein erstes inneres Element (30) aufweist, mit dem zweite innere Elemente (31, 32), die mit dem beweglichen Drücker (56) versehen sind, gekuppelt sind, wobei das Abdeckelement (20) und das erste innere Element (30) durch Befestigungsmittel (70, 80) mechanisch aneinander befestigt sind.

3. Schubwagen nach Anspruch 2, **dadurch gekennzeichnet, dass** das Abdeckelement (20) eine erste und eine zweite Fläche (24, 25) aufweist, wobei die erste Fläche Öffnungen (22, 23) aufweist, die ermöglichen, dass der Drücker (56), der im Inneren des Abdeckelements (20) angeordnet ist, erreicht und bewegt werden kann.

4. Schubwagen nach Anspruch 3, **dadurch gekennzeichnet, dass** das Abdeckelement (20) ein erstes Endteil (34) aufweist, das so angeordnet ist, dass es der zweiten Fläche (25) des Abdeckelements zugewandt ist, und ein flaches zweites Endteil (36), das Befestigungsmittel (37) für die zweiten inneren Elemente (31, 32) des Abdeckelements (20) aufweist, wobei das erste innere Element (30) seitliche geneigte ebene Endabschnitte (38) aufweist, von denen die Elemente (39) vorstehen, um formschlüssig mit den in dem Handgriff (9) vorgesehenen Ausnehmungen (40) zusammenzuwirken.

5. Schubwagen nach Anspruch 4, **dadurch gekennzeichnet, dass** Befestigungsmittel für die zweiten inneren Elemente geneigte ebene Vorsprünge (37) sind, wobei sich jeder Vorsprung in Richtung dem benachbarten seitlichen Endabschnitt (38) zugewandt verjüngt, wobei der Vorsprung von einem Dorn (50) getragen wird, der in einem inneren Hohlraum (51) des ersten inneren Elements (30) elastisch bewegbar ist.

6. Schubwagen nach Anspruch 5, **dadurch gekennzeichnet, dass** die Vorsprünge (37) des ersten inneren Elements mit wenigstens einer Ausnehmung (45) zusammenwirken, die in einer ersten Seite (43) jedes der zweiten inneren Elemente (31, 32) vorgesehen ist, wobei letztere identisch, jedoch gespiegelt, in dem Abdeckelement (20) sind und eine zweite Seite (44) aufweisen, die angeordnet ist, um an der ersten Fläche (24) des Abdeckelements (20) anzuliegen, wobei der Drücker (56) in jedem der zweiten inneren Elemente (31, 32) bewegbar ist.

7. Schubwagen nach Anspruch 6, **dadurch gekennzeichnet, dass** der Drücker (56) gegen eine Feder (57) in dem korrespondierenden zweiten inneren Element (31, 32) bewegbar ist, wobei der Drücker einen Stift (58) trägt, der seitlich von dem Abdeckelement vorsteht, um mit der korrespondierenden Aufnahme (59) in dem Handgriff (9) des nach Art eines Regenschirms schließbaren Schubwagens (2) zusammenzuwirken.

## Revendications

1. Poussette canne (2) comprenant un dispositif (1), un châssis (3) monté sur roues et portant un support pour un enfant, ledit châssis (3) possédant des barres latérales (5) s'étendant à l'arrière dudit support et présentant des poignées d'extrémité (9) pouvant tourner autour d'un axe longitudinal (W) des barres (5) correspondantes, de manière à être en mesure de se trouver dans une position dans laquelle elles convergent vers un plan central (P) traversant le châssis (3), ledit dispositif comprenant un corps (100) présentant des organes de connexion (39) susceptibles de se connecter par emboîtement à des logements (40) prévus dans lesdites poignées (9) et comprenant des organes mobiles (56), sollicités par ressort, susceptibles de se connecter de manière libérable à des sièges correspondants (59) prévus dans lesdites poignées (9), ladite connexion se faisant dans une direction perpendiculaire à celle de la connexion entre lesdits organes (39) et lesdits logements (40), le corps, lorsqu'il est connecté de cette manière aux poignées (9), étant disposé transversalement par rapport au plan central (P), traversant ledit châssis (3), et reliant fermement les poignées (9) ensemble, de façon à définir une poignée typique d'une poussette de type repliable comme un livre, dans lequel les organes sollicités par ressort sont des poussoirs (56) ; **caractérisée en ce que** le dispositif peut être détaché et séparé des poignées rotatives (9), par une action sur ledit poussoir.

2. Poussette selon la revendication 1, **caractérisée en ce que** son corps (100) comprend un organe (20) creux à l'intérieur (en 21), avec des ouvertures (27) évasées, latérales, opposées, ledit organe creux, ou organe de couverture, contenant un premier organe intérieur (30) auquel sont couplés des deuxièmes organes intérieurs (31, 32) pourvus des poussoirs (56), ledit organe de couverture (20) et ledit premier organe intérieur (30) étant fixés mécaniquement entre eux par des moyens de fixation (70, 80).

3. Poussette selon la revendication 2, **caractérisée en ce que** l'organe de couverture (20) présente une première et une deuxième faces (24, 25), la première face présentant des ouvertures (22, 23) permettant d'atteindre et de déplacer ledit poussoir (56) positionné à l'intérieur dudit élément de couverture (20).

4. Poussette selon la revendication 3, **caractérisée en ce que** l'organe de couverture (20) présente une première partie d'extrémité (34) destinée à faire face à la seconde face (25) de l'organe de couverture, et une seconde partie d'extrémité plate (36) présentant des moyens (37) de fixation desdits deuxièmes organes intérieurs (31, 32) de l'organe de couverture (20), ledit premier organe intérieur (30) présentant des portions d'extrémité (38) planes, inclinées, latérales, dont saillent les organes (39) pour coopérer par emboîtement avec les logements (40) prévus dans la poignée (9).

5. Poussette selon la revendication 4, **caractérisée en ce que** des moyens de fixation pour les seconds organes intérieurs sont des saillies (37) planes, inclinées, chaque saillie s'effilant dans la direction faisant face à la partie d'extrémité latérale (38) adjacente, ladite saillie étant portée par une lame (50) élastiquement mobile dans une cavité interne (51) du premier organe intérieur (30).

6. Poussette selon la revendication 5, **caractérisée en ce que** les saillies (37) du premier organe intérieur coopèrent avec au moins un logement (45) prévu dans une première face (43) de chacun des seconds organes intérieurs (31, 32), ces derniers étant identiques, mais spéculaires, à l'intérieur de l'organe de couverture (20), et présentant une deuxième face (44) agencée pour se trouver contre la première face (24) dudit organe de couverture (20), le poussoir (56) étant mobile à l'intérieur de chacun desdits seconds organes intérieurs (31, 32).

7. Poussette selon la revendication 6, **caractérisée en ce que** le poussoir (56) est mobile à l'encontre d'un ressort (57) à l'intérieur du deuxième organe intérieur correspondant (31, 32), ledit poussoir portant une broche (58) faisant saillie latéralement de l'organe de couverture, pour coopérer avec le siège correspondant (59) dans la poignée (9) de la poussette (2) de type poussette canne.
